Europäisches Patentamt

European Patent Office

Office européen des brevets

(11) Publication number: 0 352 045
A2

# (12) EUROPEAN PATENT APPLICATION

(21) Application number: 89307221.5

(22) Date of filing: 17.07.89

(51) Int. Cl.⁴: B29D 30/04

(30) Priority: 18.07.88 GB 8817039

(43) Date of publication of application:
24.01.90 Bulletin 90/04

(84) Designated Contracting States:
BE CH DE ES FR GB IT LI NL SE

(71) Applicant: MARTECON (U.K.) LIMITED
432, Marine Road
Morecambe LA4 6AA(GB)

(72) Inventor: Toole, Kenneth James
432, Marine Road
Morecambe LA4 6AA(GB)

(74) Representative: Allard, Susan Joyce et al
BOULT, WADE & TENNANT 27 Furnival Street
London EC4A 1PQ(GB)

(54) Improvements in or relating to polymer filled tyres.

(57) A method for filling a tyre, which method comprises:-
    (i) positioning at least one insert capable of air
entrapment into a tyre casing and assembling the
insert and the tyre casing onto a wheel rim;
    (ii) providing a seal between the tyre casing
and the wheel rim;
    (iii) injecting a liquid polymeric filling material
into the tyre casing and exhausting air from the tyre
casing; and
    (iv) allowing the polymeric material to cure.

EP 0 352 045 A2

## IMPROVEMENTS IN OR RELATING TO POLYMER FILLED TYRES

The present invention is concerned with improvements in polymer filled tyres.

Tyres, normally air inflated and pressurised, are vulnerable to deflation caused by penetration of the tread or sidewall of the tyre and frequently by more serious damage to the actual carcase of the tyre.

Larger vehicles utilised in severe working environments may be immobilised through tyre deflation and the repair of deflated or damaged tyres will constitute inconvenient and expensive vehicle "downtime".

Damaging operating environmental conditions are experienced by vehicles utilised, for example, in the following areas: mining, excavation & construction, quarrying, forestry, refuse tips, glass works, steel works, salvage operations, ports and docks, military and many others.

Well established practice, throughout the world, is to fill and pressurise normally air inflated and pressurised tyres with a polymer composition which may be introduced into the tyre and subsequently reacts within the tyre to become a resilient "rubber-like" composition. One tyre filling operation of this type is described in British Patent No. 1485404 to Synair Corporation.

Processes of this type are well established, generally cost effective and are increasingly accepted as standard practice in both commercial and military application.

The preferred polymer system for tyre filling is a two-component polyurethane system which is metered and mixed immediately prior to injection into the tyre. Injection is normally, but not necessarily, effected through the standard tyre valve and the process is applicable for both tubed and tubeless tyres. Tyres which have been treated in this manner clearly possess advantages over vulnerable, normally air inflated tyres used in difficult terrain.

The polymer system for tyre filling has been formulated to simulate the drive and ride characteristics of air pressurised tyres. In practice it has been found that the polymer within the tyre casing should be void free i.e., a solid polymer system as opposed to a structured cellular composition. An important reason for this relates to the need for the heat developed within the overall structure of the tyre in conditions of useage to be transmitted out of, and away from, the tyre. Excessive heat generation and retention can cause premature degradation and destruction of the tyre and the polymer within the tyre casing.

Cellular polymer compositions have been evaluated. They are substantially self insulating. Heat build up in a working tyre filled with such a composition is potentially serious to the point that degradation and premature failure may occur.

The prior art tyre filling systems suffer certain disadvantages. One disadvantage is that the ride characteristics of polymer filled tyres do not match the comfort of conventionally air inflated tyres. Another disadvantage is that the pressurisation of a tyre with polymer is considerably more critical than with air. The cured polymer cannot be removed from a tyre and any over pressurisation will result in a poor "footprint" profile which may considerably affect steering, drive, tyre wear, comfort and potentially damage equipment. The weight of the polymer introduced into a tyre casing is another important consideration since the weight will affect the vehicle performance and operating costs.

We have now developed a tyre filling system which overcomes at least some of the disadvantages of the above described tyre filling system and has some of the advantages of the conventional air filled tyres.

Accordingly, the present invention provides a method for filling a tyre, which method comprises:-

(i) positioning at least one insert capable of air entrapment into a tyre casing and assembling the insert and the tyre casing onto a wheel rim;

(ii) providing a seal between the tyre casing and the wheel rim;

(iii) injecting a liquid polymeric filling material into the tyre casing and exhausting air from the tyre casing; and

(iv) allowing the polymeric material to cure.

The seal between the tyre casing and the coated rim may be formed by inflating the assembly formed in step (i) above in order to provide the required seal. The tyre is inflated to a predetermined pressure in order to ensure that there is a good seal between the tyre and wheel rim. Tyres are normally inflated to significant pressures and a pressure of 7 atmospheres is not uncommon. In this instance the air pressure will be released from the tyre casing as the polymeric filling material is injected into the tyre casing. Alternatively, the seal may be provided by the tyre casing being assembled onto a specifically designed or adapted wheel rim which forms the seal with the tyre casing without inflation of the assembly formed in step (i) being necessary. In this instance, as the polymeric filling material is injected into the tyre casing, the air present in the tyre casing is exhausted from the tyre.

The insert is preferably a single hoop of an aerated polymer or other foam material which is precut to a predetermined profile to suit the dimensions and volume of the particular tyre. The insert preferably is extruded to have a substantial outer skin and joined end to end by heat welding. The ends may also be joined by means of adhesive, preferably with the insert having interlocking ends to reinforce the adhesive and reduce the tendency to separate under stress. It may, however, be advantageous or necessary for certain tyres to incorporate more than one insert into the tyre. Thus, for example, a plurality of small inserts may be provided, which preferably are in the form of hoops or bands which are stretched over the tyre rim during assembly of the inserts and tyre casing onto the wheel rim. Whilst the preferred insert has a circular cross-section, inserts having other cross-sections, such as that of the tyre casing profile or of square cross-section may also advantageously be used. The insert may be extruded and is preferably of a substantially closed cell construction. It may also be formed from sheet or veneered polymer foam.

Furthermore, the insert may be a small diameter inflated rubber or polymer tube which may be in the form of a single loop, or may be coiled in a plurality of loops around the tyre rim. Another example of an air entrapment insert is an air-containing plastic laminate, such as the so-called "bubble wrap" which is used to protect articles in transit.

It is preferred that the insert is retained in the desired position on the tyre rim by a suitable retaining means, for example by means of wires, clips or pins which secure the insert to the wheel rim. This prevents the insert from rising when the liquid polymeric filling material is injected into the tyre casing when the tyre casing is laid on its side which is the preferred position for filling.

The insert will generally have a volume of from 10 to 80% of the volume of the tyre casing, more preferably 45 to 55% of the volume of the tyre casing.

The insert may be provided with one or a plurality of protrusions on the surface thereof which protrude into the void of the tyre casing when the tyre casing is located on the wheel rim. In this manner, a better mechanical bond can be achieved between the insert and the polymeric filling material.

The tyre is filled with the liquid polymeric material to a pressure for example of 7 atmospheres, whilst air is exhausted from the tyre casing. The air will be under pressure if the tyre casing has been inflated. The liquid polymeric material is preferably injected into the tyre casing at the same rate as air is released from the tyre casing.

The insert, which is preferably a snug fit against the wheel rim will suffer some compression depending upon the nature and performance of the selected polymer filling material. However, a substantial insert volume will be retained and the air within the insert will be compressed to generate an internal pressure of about 7 atmospheres.

The preferred insert material is a closed cell polyethylene, which may be cross-linked if desired. Other suitable polymers for the insert material include polyurethane, polyvinyl chloride, polypropylene, polystyrene and related polymers. The preferred polymeric filling material is a polyurethane, but other polymeric filling materials may also be used.

The present invention also includes within its scope a filled tyre whenever produced by the above-described method.

The tyre produced according to the method of the present invention possesses the following advantages:
it is lighter than conventional filled tyres;
it has an improved similarity to a pneumatic ride;
it reduces the risk of over pressurisation at the polymer injection stage;
it reduces the vehicle operating costs because of the reduction in weight and the improvement in power/weight ratio; and
it is cheaper than conventional filled tyres.

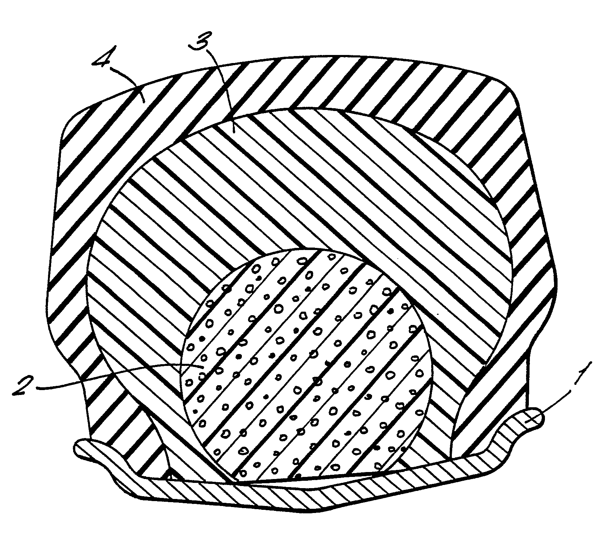

The present invention will now be further described with reference to the single figure of the drawings which is a cross-sectional view of a tyre according to the invention.

Referring to the Figure, a wheel rim 1 has an insert 2 of a closed cell polyethylene foam material positioned thereon. The insert 2 surrounds the wheel rim 1 to form a hoop, the ends of which are heat sealed together. The insert 2 is surrounded by a polyurethane filling material 3 which fills the void between the insert 2 and the tyre casing 4.

The tyre construction as shown is prepared in the following manner. The insert 2 and the tyre casing 4 are assembled onto the wheel rim 1. The assembley so formed is inflated to provide a seal between the tyre casing 4 and the wheel rim 1. Air pressure is then released from the tyre casing 4 at the same rate as a liquid polyurethane material or liquid polyurethane forming mixture is injected into the casing. The liquid polyurethane material displaces the air and injection continues until all of the air is expelled. The polyurethane then cures to a solid polymer 3 surrounding the insert 2.

## Claims

1. A method for filling a tyre, which method comprises the steps of:-
(i) positioning at least one insert capable of air entrapment into a tyre casing and assembling the insert and the tyre casing onto a wheel rim;
(ii) providing a seal between the tyre casing and the wheel rim;

(iii) injecting a liquid polymeric filling material into the tyre casing and exhausting air from the tyre casing; and

(iv) allowing the polymeric material to cure.

2. A method as claimed in claim 1 wherein the insert is a single hoop of an aerated polymer or other foam material.

3. A method as claimed in claim 1 wherein a plurality of inserts is provided, the inserts being in the form of hoops or bands which are stretched over the tyre rim during assembly of the inserts and tyre casing onto the wheel rim.

4. A method as claimed in any one of claims 1 to 3 wherein the insert or inserts is/are made polyethylene, polyurethane, polyvinyl chloride, polypropylene or polystyrene.

5. A method as claimed in claim 1 wherein the insert comprises one or a plurality of hoops of an inflated rubber or polymer tube.

6. A method as claimed in any one of the preceding claims wherein the insert or inserts has/have a volume of from 10 to 80%, preferably 45 to 55% of the volume of the tyre casing.

7. A method as claimed in any one of the preceding claims wherein the insert or inserts has/have one or more protrusions formed thereon to assist in forming a mechanical bond to the polymeric filling material.

8. A method as claimed in any one of the preceding claims wherein the seal between the tyre casing and the wheel rim is formed by inflating the assembly formed in step (i).

9. A method as claimed in any one of the preceding claims wherein the polymeric filling material is a polyurethane.

10. A method as claimed in any one of the preceding claims wherein the liquid polymeric filling material is injected into the tyre casing at the same rate as air is released from the tyre casing.

11. A method as claimed in any one of the preceding claims wherein the insert is retained in position in the tyre casing by a suitable retaining means.